# EUROPEAN PATENT APPLICATION

(11) **EP 3 395 628 A1**
(43) Date of publication of application: **31.10.2018**
(21) Application number: 17461527.8
(22) Date of filing: 27.04.2017
(51) Int. Cl.: B60S 1/34

(54) **VEHICLE WIPER DEVICE**

(71) Applicant: Valeo Autosystemy SP. Z.O.O., 32-050 Skawina (PL)
(72) Inventor: CEBULA, Piotr, 32-050 Skawina (PL)
(74) Representative: Callu-Danseux, Violaine

(57) **Abstract**

A vehicle wiper device (1) comprising a wiper motor (11), a mounting bracket (10) for mounting the wiper motor (11), a primary arm (2) and a secondary arm (7), the primary arm (2) having a first end (3) and a second end (4), the first end (3) of the primary arm (2) is able to be rotatably coupled with a wiper blade (5), the second end (4) of the primary arm (2) is able to be fixed to an output shaft (12) of the wiper motor (11), the secondary arm (7) having a first ending (8) and a second ending (9), the first ending (8) of the secondary arm (7) is able to be coupled to the wiper blade (5) , wherein the second ending (9) of the secondary arm (7) is able to be rotatably coupled with the mounting bracket (10).

## Description

### TECHNICAL FIELD OF THE INVENTION

The present invention relates to a vehicle wiper device.

Vehicle wiper devices are generally known. The vehicle wiper device comprises a wiper arm provided with a wiper blade for wiping a windscreen of a vehicle. The wiper device provides a drive to a wiper blade. The drive is transferred to the wiper blade via the wiper arm. The wiper blade, usually made of rubber, attached to the wiper arm wipes over the surface of the windscreen to be wiped. Vehicle wiper devices are used for wiping a windscreen of a vehicle, in particular a windscreen of a car. However, the invention is not limited to be used with cars but also to be used with trains and other fast vehicles.

### STATE OF THE ART

A vehicle wiper device provides a reciprocating movement of the wiper arm and wiper blade attached thereon, to cause wiping a windscreen of a vehicle. The reciprocating movement means that the wiper arm with the wiper blade performs reciprocating movement between a normal position of the wiper arm, which is also a rest position of the wiper arm, and a maximum deflected position of the wiper arm. The reciprocating movement of the wiper arm causes that the wiper blade arcs an area which is defined as wiping area.

The wiping operation is performed properly when the wiper blade is moved over the windscreen with high accuracy, i.e. the wiper blade arcs in the range of desired wiping angle. Moreover, a width of the wiping area is an issue. There is a need to make the wiping area wider without increasing a size of the wiper blade. A wide wiping range provides that in some applications one wiper blade is enough to wipe the whole windscreen. In other applications wide wiping range provides that the whole size of the wiper blade is relatively small in spite of very wide dimensions of windscreen.

In state of the art the proper wiping range of desired width is provided by a pantograph type wiping device, as disclosed in FR2887831. The known pantograph type wiper device comprises a wiper arm mounted on the wiper motor shaft and secondary arm coupled to the crank mounted free in rotation around a transmission shaft.

However, the pantograph type vehicle wiper device comprises many components and the device is very complex. This causes that the known pantograph type vehicle wiper device is heavy, which results that the forces acting on the device are relatively high. In consequence, the device is more likely to be damaged. Moreover, the large number of components of the device makes the device costly. Since more parts need to be manufactured and the assembly process of the device is more complex, thus, requires more time.

Thus, there is a need to provide a vehicle wiper device providing desired wiping range and wide wiping area being light in weight and simple.

### DISCLOSURE OF THE INVENTION

To fulfill the above-mentioned needs, the present invention provides a vehicle wiper device.

A vehicle wiper device according to the present invention comprises a wiper motor and a mounting bracket for mounting the wiper motor. Preferably, the wiper motor is an electronized motor or a reversible motor. The vehicle wiper device further comprises a primary arm and a secondary arm. The primary arm has a first end and a second end. The first end of the primary arm is able to be rotatably coupled with a wiper blade. The second end of the primary arm is able to be fixed to an output shaft of the wiper motor. The secondary arm has a first ending and a second ending. The first ending of the secondary arm is able to be coupled to the wiper blade. The second ending of the secondary arm is able to be rotatably coupled with the mounting bracket.

The construction of the vehicle wiper device according to the invention provides that the wiping operation is performed with high accuracy and wide wiping range. Moreover the construction of the wiper device is simple, cheap and requires less number of components than state of the art devices. Widening of the wiping range obtained by the pantograph type wiper device enables using of one-arm wiper device according to the present invention instead of two-arm wiper device according to the state of the art. Thus, further reduction of manufacturing costs of the wiper device for wiping a windscreen of a vehicle is obtained.

Preferably, the vehicle wiper device further comprises a pin for rotatable coupling the second ending of the secondary arm with the mounting bracket.

The pin is a separate part for rotatable coupling the secondary arm with the mounting bracket. When the pin is worn out by operation of the vehicle wiper device, the pin can be easily replaced without a necessity of replacement of the whole secondary arm or the mounting bracket.

Preferably, the pin is made of steel.

The pin made of steel is particularly advantageous since high durability of the pin is obtained.

Preferably, the pin is made of plastic.

The pin made of plastic is particularly advantageous since the plastic pin is lightweight and manufacturing of the plastic pin is easy and cheap.

Preferably, the pin is fixed to the mounting bracket and rotatably coupled with the second ending of the secondary arm.

Preferably, the pin is fixed to the second ending of the secondary arm and rotatably coupled with the mounting bracket.

Preferably, the mounting bracket comprises a seating for receiving the pin.

A seating for receiving the pin provided in the mounting bracket enables the pin to be rotatably coupled or fixed to the mounting bracket, depending on the embodiment of the present invention. Therefore, the seating ensures stable rotatability of the pin with respect to the mounting bracket or firm fixing of the pin and the mounting bracket.

Preferably, the pin and the mounting bracket are formed as a one part.

Preferably, the pin and the secondary arm are formed as a one part.

Manufacturing of the pin and the secondary arm or manufacturing of the pin and the mounting bracket as a one part can be realized by means of a single process, e.g. casting. Therefore, shortening of time required for manufacturing is achieved. Further, reduction of a number of components is achieved, thus assembly of the vehicle wiper device is shorter and easier.

Preferably, the mounting bracket is rotatably coupled with the secondary arm via a bearing.

The bearing between the secondary arm and the mounting bracket may comprise a rolling bearing. The bearing ensures that friction forces between the secondary arm and mounting bracket are reduced. Thus, it is particularly advantageous since the vehicle wiper device operates more smoothly and reliable. Further, due to less friction forces wear and tear of the rotatable coupling during use of the vehicle wiper device is also reduced.

Preferably, fixing of the pin is carried out by means of a close fit.

A fixing using close fit is particularly advantageous since no other components are required for fixing the pin with the mounting bracket or with the secondary arm. Therefore the costs of manufacturing are reduced. Additionally, close fit fixing ensures reliable and easy fixing of the two elements.

Preferably, fixing of the pin is carried out by means of a threaded connection.

The pin can be fixed to the mounting bracket or to the secondary arm by means of a threaded connection, i.e. the pin can be provided with an external thread an the secondary arm or the mounting bracket can be provided with an internal thread. In another embodiment the pin can be screwed by means of a bolt to the secondary arm or to the mounting bracket. A threaded connection is easy to assemble and ensures a firm permanent connection between the components.

Preferably, rotatable coupling of the pin is carried out by means of a clearance fit.

A clearance fit coupling is simple in terms of its construction, therefore it is an easy way of providing a rotatable coupling between the secondary arm and the mounting bracket. An assembly of a clearance fit coupling is also very simple therefore a duration of the assembly process is short.

Preferably, the secondary arm is axially coupled to the mounting bracket by means of a shape connection.

When the secondary arm is coupled with the mounting bracket using for example a clearance fit, the secondary arm can be easily disconnected from the mounting bracket during acting of external forces thereon. Such a situation results in a loss of a pantograph function of the secondary arm and the vehicle wiper device operates incorrectly. Therefore, the secondary arm can be axially coupled with the mounting bracket in order to prevent disconnecting of the secondary arm in an axial direction. Thus, a proper operation of the vehicle wiper device during applying external forces on the secondary arm is obtained.

Preferably, the shape connection is constituted by a spherical shape connection. Preferably, the spherical shape connection constitutes an outward spherical section provided on a lateral surface of the pin and a corresponding inward spherical section provided on a lateral surface of a socket of the secondary arm or a corresponding inward spherical section provided on a lateral surface of the seating of the mounting bracket.

Axial coupling by means of the inward and outward spherical sections is particularly advantageous since the spherical sections have simple construction. Therefore the spherical sections are easy to be manufactured and assembled.

### BRIEF DESCRIPTION OF FIGURES

The present invention is described in greater details with reference to the accompanying figures, in which:
Fig. 1 is a general view of a vehicle wiper device according to the present invention with a windscreen to be wiped.
Fig. 2 is an enlarged view of a vehicle wiper device of fig. 1 according to the present invention.
Fig. 3 is a schematic cross section view of the vehicle wiper device according to the invention.
Fig. 4 is a schematic cross section view of a preferred embodiment of the vehicle wiper device provided with a spherical shape connection between the pin and the secondary arm.

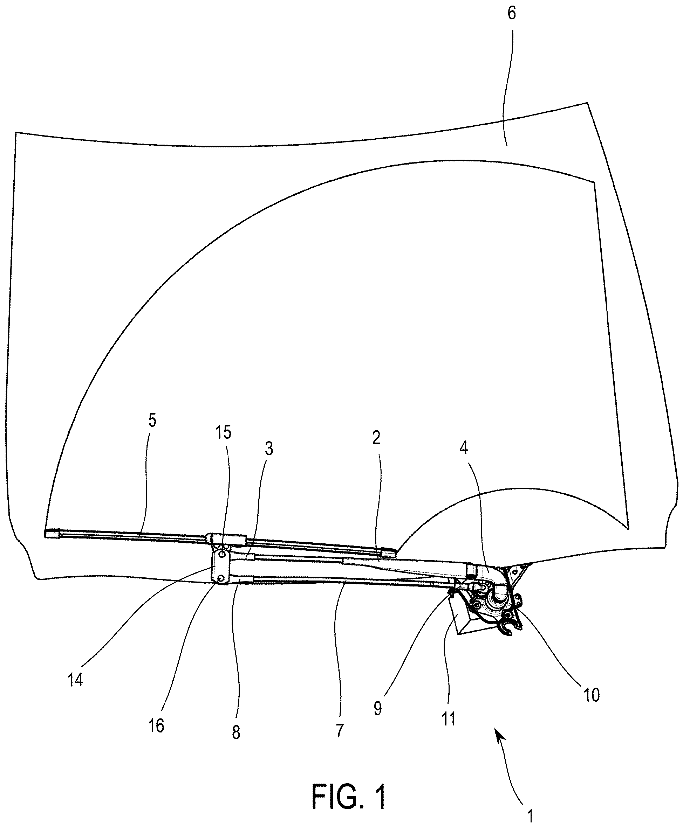

Fig. 1 presents a vehicle wiper device 1 according to the present invention. The vehicle wiper device 1 is mounted in a vehicle for wiping the windscreen 6 of the vehicle.

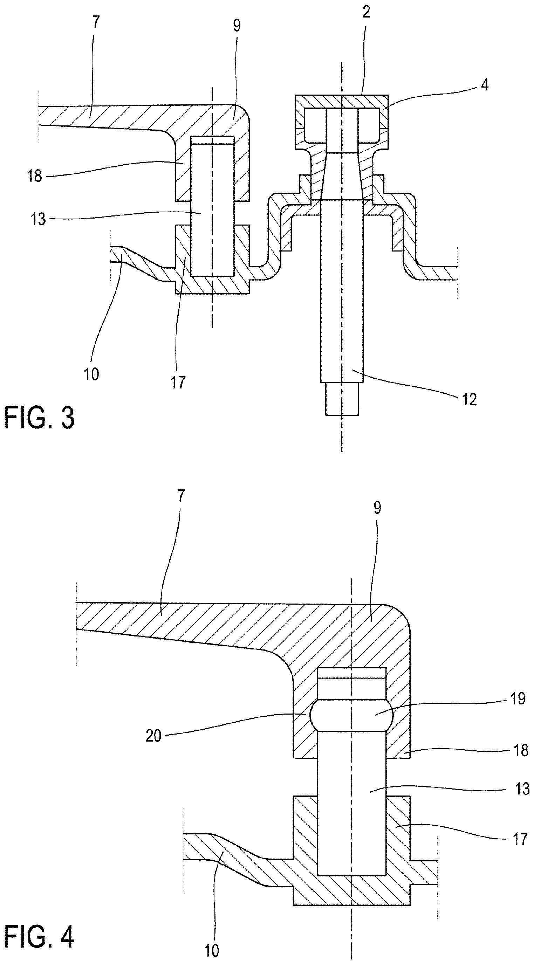

The vehicle wiper device 1 comprises a wiper motor 11 having an output shaft (shown in fig. 3). The wiper motor is preferably an electronized motor or a reversible motor. The wiper motor 11 is supported by a mounting bracket 10. Furthermore, the vehicle wiper device 1 comprises a primary arm 2 and a secondary arm 7. When the vehicle wiper device 1 is positioned in a rest position, the primary arm 2 and the secondary arm 7 are positioned substantially parallel to each other. The rest position is the lowest position of the primary arm 2 and the secondary arm 7 on the windscreen 6. The primary arm 2 has a first end 3 and a second end 4. The first end 3 of the primary arm 2 is rotatably linked with a linking element 14 via a first pinned connection 15. The secondary arm 7 has a first ending 8 and a second ending 9. The first ending 8 of the secondary arm 7 is rotatably linked with the linking element 14 via a second pinned connection 16. At one end of the linking element 14 the wiper blade 5 is attached. The wiper blade 5 is positioned in abutment with the windscreen 6 to be wiped, such that the wiper blade 5 wipes the windscreen 6 during operation of the vehicle wiper device 1.

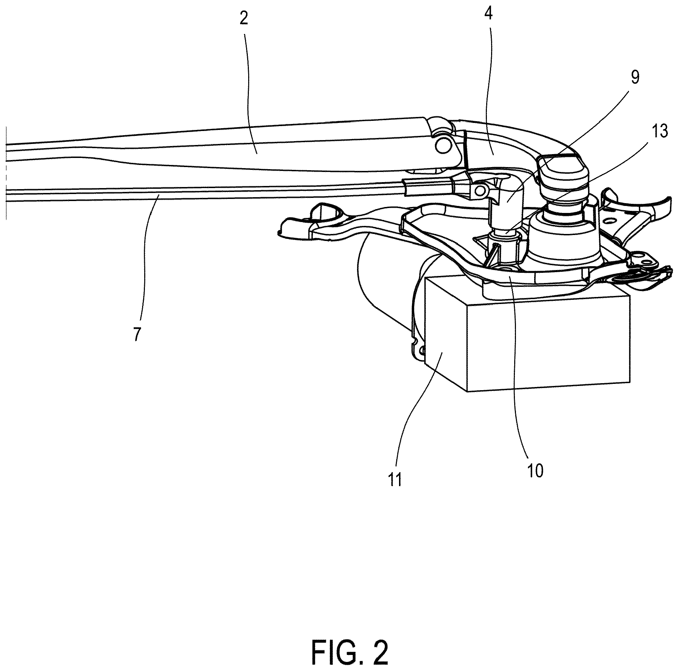

In fig. 2 there is shown an enlarged view of the vehicle wiper device 1 of fig. 1 according to the present invention. The second end 4 of the primary arm 2 is fixed to the output shaft (shown in details in fig. 3), such that the primary arm 2 performs a reciprocating movement. The second ending 9 of the secondary arm 7 is rotatably coupled with the mounting bracket 10.

It should be understood that the primary arm 2 is an arm driven by the wiper motor 11. Therefore the primary arm 2 provides a reciprocating movement of the wiper blade 5, such that wiping of the windscreen 6 of the vehicle is performed. The secondary arm 7 is an idle arm, i.e. the secondary arm 7 is a non-driven arm. When the vehicle wiper device 1 operates, i.e. the wiper blade 5 performs a reciprocating movement over the windscreen 6, the non-driven secondary arm 7 causes deflecting of the wiper blade 5 with respect to the primary arm 2. Due to the deflection of the wiper blade 5 during a reciprocating movement on the windscreen 6, the wiper blade 5 has a non-circular wiping pattern, as it is presented in fig. 1. The non-circular wiping pattern of the wiper blade 5 means that the wiping pattern is wider than the circular wiping pattern. The non-circular wiping pattern ensures that greater surface of the windscreen 6 is wiped with the wiper blade 5 performing reciprocating movement on the windscreen 6.

Fig. 3 is a schematic cross section view taken through a connection between the secondary arm 7 and the mounting bracket 10 and through a connection between the primary arm 2 and the output shaft 12. As it can be seen, the second end 4 of the primary arm 2 is fixed directly to the output shaft 12 of the wiper motor (the wiper motor is not shown in fig. 3) supported by the mounting bracket 10. In this preferred embodiment there is further provided a pin 13 for rotatable connecting the secondary arm 7 with the mounting bracket 10. In the mounting bracket 10 there is provided a seating 17 receiving the pin 13 at one end thereof. The pin 13 is fixed in the seating 17, thus the pin 13 is permanently mounted in the seating 17. In this preferred embodiment the pin 13 is mounted in the seating 17 by means of a close fit between the pin 13 and the seating 17. Fixing of the pin 13 can be also carried out by means of a threaded connection, a spline connection or any other fixing connection known in the prior art.

In this preferred embodiment the second ending 9 of the secondary arm 7 has a socket 18 for receiving the pin 13. The other end of the pin 13 is rotatably mounted in the socket 18 in such a way that the secondary arm 7 is able to rotate freely on the pin 13. In this preferred embodiment rotatable coupling of the pin 13 is carried out by means of a clearance fit between the pin 13 and the socket 18.

Preferably, the secondary arm 7 is further axially secured to the pin 13 by means of, for example, a shape connection, what is shown in fig. 4. For example, an outward spherical section 19 is provided on a lateral surface of the pin 13 and a corresponding inward spherical section 20 is provided on a lateral surface of the socket 18. Cooperation of the two spherical sections ensures that the secondary arm 7 rotates with respect to the pin 13 and cannot be accidentally disconnected from the pin 13.

In another preferred embodiment, the pin 13 is rotatably mounted in the seating 17 of the mounting bracket 10. Thus, the pin 13 is fixed in the socket 18 of the secondary arm 7. The above-mentioned techniques of rotatably coupling and fixing of the components may be incorporated in this preferred embodiment as well.

In another preferred embodiment a bearing (not shown) is provided between the pin 13 and the seating 17 of the mounting bracket 10. In yet another preferred embodiment the bearing is provided between the pin 13 and the socket 18 of the secondary arm 7. The bearing may comprise a rolling bearing such as a needle bearing, a ball bearing, etc.

It should be understood that a word "coupled", "coupling" used in this specification means that the two components may be connected with each other directly or indirectly, for example the two components may be connected by means of an intermediate element.

The described invention is susceptible of numerous modifications and variations, all of which are within the scope of the appended claims. The inventive features as disclosed herein may be combined with each other without departing from the scope of the invention. All the details may further be replaced with other technically equivalent elements. Therefore, the present invention is not limited by the specific disclosure herein.

### LIST OF REFERENCE NUMBERS

- (1): vehicle wiper device
- (2): primary arm
- (3): first end of the primary arm
- (4): second end of the primary arm
- (5): wiper blade
- (6): windscreen of a vehicle
- (7): secondary arm
- (8): first ending of the secondary arm
- (9): second ending of the secondary arm
- (10): mounting bracket
- (11): wiper motor
- (12): output shaft of the wiper motor
- (13): pin
- (14): linking element
- (15): first pinned connection
- (16): second pinned connection
- (17): seating of the mounting plate
- (18): socket of the secondary arm
- (19): outward spherical section
- (20): inward spherical section

## Claims

1. A vehicle wiper device (1) comprising a wiper motor (11), a mounting bracket (10) for mounting the wiper motor (11), a primary arm (2) and a secondary arm (7), the primary arm (2) having a first end (3) and a second end (4), the first end (3) of the primary arm (2) is able to be rotatably coupled with a wiper blade (5), the second end (4) of the primary arm (2) is able to be fixed to an output shaft (12) of the wiper motor (11), the secondary arm (7) having a first ending (8) and a second ending (9), the first ending (8) of the secondary arm (7) is able to be coupled to the wiper blade (5) **characterized in that** the second ending (9) of the secondary arm (7) is able to be rotatably coupled with the mounting bracket (10).

2. A vehicle wiper device (1) according to claim 1, **characterized in that** it further comprises a pin (13) for rotatably coupling the second ending (9) of the secondary arm (7) with the mounting bracket (10).

3. A vehicle wiper device (1) according to claims 1-2, **characterized in that** the pin (13) is made of steel.

4. A vehicle wiper device (1) according to claims 1-2, **characterized in that** the pin (13) is made of plastic.

5. A vehicle wiper device (1) according to claims 1-4, **characterized in that** the pin (13) is fixed to the mounting bracket (10) and rotatably coupled with the second ending (9) of the secondary arm (7).

6. A vehicle wiper device (1) according to claims 1-4, **characterized in that** the pin (13) is fixed to the second ending (9) of the secondary arm (7) and rotatably coupled with the mounting bracket (10).

7. A vehicle wiper device (1) according to claims 1-6, **characterized in that** the mounting bracket (10) comprises a seating (17) for receiving the pin (13).

8. A vehicle wiper device (1) according to claims 1-3, 5-7, **characterized in that** the pin (13) and the mounting bracket (10) are formed as a one part.

9. A vehicle wiper device (1) according to claims 1-8, and **characterized in that** the pin (13) and the secondary arm (7) are formed as a one part.

10. A vehicle wiper device (1) according to claims 1-9, **characterized in that** the mounting bracket (10) is rotatably coupled with the secondary arm (7) via a bearing.

11. A vehicle wiper device (1) according to claim 5 or 6, **characterized in that** fixing of the pin (13) is carried out by means of a close fit.

12. A vehicle wiper device (1) according to claim 5 or 6 , **characterized in that** fixing of the pin (13) is carried out by means of a threaded connection.

13. A vehicle wiper device (1) according to claim 5 or 6, **characterized in that** rotatable coupling of the pin (13) is carried out by means of a clearance fit.

14. A vehicle wiper device (1) according to claims 1-13, **characterized in that** the secondary arm (7) is axially coupled to the mounting bracket (10) by means of a shape connection.

15. A vehicle wiper device (1) according to claim 14, **characterized in that** the shape connection is constituted by a spherical shape connection.
